# EUROPEAN PATENT APPLICATION

(11) **EP 4 773 008 A1**
(43) Date of publication of application: **08.07.2026**
(21) Application number: 24859109.1
(22) Date of filing: 19.06.2024
(51) Int. Cl.: G06F 9/52, B60R 16/02

(54) **VEHICLE CONTROL DEVICE**

(30) Priority: 01.09.2023 JP 2023142109
(71) Applicant: Astemo, Ltd., Chiyoda-ku, Tokyo 1000004 (JP)
(72) Inventor: MIZOGUCHI Masashi, Tokyo 100-8280 (JP); YOSHIMURA Kentaro, Tokyo 100-8280 (JP); IKEDA Yasuhiro, Hitachinaka-shi, Ibaraki 312-8503 (JP); SOBUE Tsuneo, Hitachinaka-shi, Ibaraki 312-8503 (JP); NOKAIDO Takaaki, Hitachinaka-shi, Ibaraki 312-8503 (JP); SAKAMOTO Hideyuki, Hitachinaka-shi, Ibaraki 312-8503 (JP); ISHIGOOKA Tasuku, Hitachinaka-shi, Ibaraki 312-8503 (JP)
(74) Representative: Strehl & Partner mbB
(86) International application number: PCT/JP2024/022213
(87) International publication number: WO 2025/047063

(57) **Abstract**

A vehicle control device includes a plurality of semiconductor chips each including one or more applications, and one or more accelerators connected to the plurality of semiconductor chips. Each of the plurality of semiconductor chips includes an accelerator access unit that controls access to the one or more accelerators, and a time slot information storage unit that stores time slot information indicating accessibility from the one or more applications to the one or more accelerators in time slots. The one or more applications are capable of outputting use requests to the one or more accelerators via the accelerator access unit. The accelerator access unit determines whether to transfer the use requests to the one or more accelerators in response to the use requests based on information about accessibility in a time slot corresponding to a current time.

## Description

### Incorporation by Reference

This application claims priority to Japanese Patent Application No. 2023-142109 filed on September 1, 2023, the contents of which are incorporated herein by reference.

### Technical Field

The present invention relates to a vehicle control device.

### Background Art

With advancement and complication of vehicle control due to progress of automatic driving, a processing amount required in a vehicle control device for automatic driving increases. In order to cope with this, a vehicle control device equipped with a plurality of System on Chips (SoCs) is used. Further, in order to improve the processing performance of each SoC, a processing speed of a central processing unit (CPU) mounted inside each SoC and multi-many-core technique have been advanced. However, an increase in processing speed is already reaching a limit due to heat generation of the SoCs and a decrease in power efficiency, and even if the number of cores is increased by the multi-many-core technique, processing that cannot be parallelized becomes a bottleneck, and expected processing performance may not be exhibited. Therefore, mounting of an accelerator has progressed. With the accelerator, specific processing such as image processing or inference in machine learning can be executed at lower power consumption and higher speed than the CPU. The accelerator is mounted inside or outside the SoCs. In order to achieve both performance and cost of a vehicle control device, it is important to efficiently utilize hardware resources, and it is required to share an accelerator among a plurality of applications.

As a technique related to sharing of an accelerator among a plurality of applications, there is a technique described in PTL 1 (JP 2022-053096 A). PTL 1 discloses a vehicle control device including a sharing storage shared by a plurality of applications, and an access right management unit that partitions one time slot so as to include a static region corresponding to an access request from an application with a time trigger method and a dynamic region corresponding to an access request from an application with an event trigger method, and allocates an access right to the sharing storage from the application to either the static region or the dynamic region.

Further, PTL 2 (JP 2013-174934 A) discloses the following computer system. That is, an access path to a sharing resource is a single interface (I/F), and a conflict control module that integrates access I/Fs from respective subsystems to the sharing resource is independently provided. The conflict control module serializes access requests from the respective subsystem to the sharing resource. In a case where a period necessary for completing the access to the sharing resource is one time slot, the access period of a subsystem is obtained by "the number of subsystems × time slot". As a result, the number of accesses to the sharing resource during a certain access period is not larger than or equal to the number of subsystems, and the accesses from the subsystems to the sharing resource appear to be performed in a fixed cycle. Therefore, in the computer system, the bus control circuit can be simply configured.

### Summary of Invention

### Technical Problem

PTL 1 does not refer to an accelerator, but is applicable by replacing a storage with an accelerator and an electronic control unit (ECU) with an SoC. That is, an accelerator can be shared between applications mounted on different SoCs. This Patent Literature assumes that an accelerator (sharing storage in this document) exists inside a certain SoC (integrated ECU in this document), and a mechanism for managing access to the accelerator (referred to as the sharing storage in this document) is installed in the SoC (referred to as the integrated ECU in this document), and arbitration is performed so that the accesses to the accelerator (referred to as the sharing storage in this document) from the applications do not conflict. On the other hand, when the present technique is applied to a vehicle control device having an accelerator outside the SoC, it is necessary to bypass an SoC having a management mechanism in order to access the accelerator from an SoC not having the management mechanism, thus deteriorating latency. This might cancel the effect of processing speed enhancement by the accelerator.

According to PTL 2, the cycle of access from an application (which is referred to as a subsystem in this document) to an accelerator (which is referred to as a sharing resource in this document) is fixed to "the number of applications × time slot", and design of a bus control circuit is facilitated. However, with this method, in a case where the number of applications using the accelerator is large and the frequency of access to the accelerator varies between the applications, an application with high frequency needs to wait until a time when the time slot allocated to this application starts, which is inefficient.

In view of the foregoing contents, an object of the present invention is to efficiently share an accelerator among a plurality of applications mounted on different SoCs, particularly for an accelerator mounted outside an SoC, and its issue is to enable directly access to the accelerator from each SoC without access conflict.

### Solution to Problem

A representative example of the invention disclosed in this present application is as follows. That is, a vehicle control device includes a plurality of semiconductor chips each including one or more applications, and one or more accelerators connected to the plurality of semiconductor chips. Each of the plurality of semiconductor chips includes an accelerator access unit that controls access to the one or more accelerators, and a time slot information storage unit that stores time slot information indicating accessibility from the one or more applications to the one or more accelerators in time slots. The one or more applications are capable of outputting use requests to the one or more accelerators via the accelerator access unit. The accelerator access unit determines whether to transfer the use requests to the one or more accelerators in response to the use requests from the one or more applications based on information about accessibility in a time slot corresponding to a current time.

### Advantageous Effects of Invention

According to an aspect of the present invention, the time when each SoC uses a corresponding accelerator is divided in advance, so that no conflict occurs. Problems, configurations, and effects other than those described above will be clarified by the following description of embodiments for carrying out the invention.

### Brief Description of Drawings

[FIG. 1] FIG. 1 is a diagram illustrating a hardware configuration of a vehicle control device according to a first embodiment.
[FIG. 2A] FIG. 2A is a diagram illustrating a software configuration in a System on Chip (SoC) before the present invention is applied.
[FIG. 2B] FIG. 2B is a diagram illustrating a software configuration in the SoC before the present invention is applied.
[FIG. 3] FIG. 3 is a diagram illustrating a state of access conflict occurring in a case where a countermeasure as in the first embodiment is not taken.
[FIG. 4] FIG. 4 is a diagram illustrating a state of bypass access occurring in a case where a general management mechanism is disposed in the first embodiment.
[FIG. 5] FIG. 5 is a diagram illustrating latency occurring until control applications of the SoCs start accessing accelerators during bypass access.
[FIG. 6] FIG. 6 is a diagram illustrating an outline of the first embodiment.
[FIG. 7] FIG. 7 is a diagram illustrating latency occurring until the control applications of the SoCs start accessing the accelerators in the case of FIG. 6.
[FIG. 8] FIG. 8 is a diagram illustrating an outline of time slot allocation in the first embodiment.
[FIG. 9] FIG. 9 is a diagram illustrating latency occurring until the control applications of the SoCs start accessing the accelerators in a case of FIG. 8.
[FIG. 10] FIG. 10 is a diagram illustrating an outline of a third embodiment.
[FIG. 11] FIG 11 is a diagram illustrating spare time slot used information internally managed by an updating unit.
[FIG. 12] FIG. 12 is a diagram illustrating an example of a flow of processing performed between SoCs when a time slot is updated in the third embodiment.
[FIG. 13] FIG. 13 is a diagram illustrating an outline of a fourth embodiment.
[FIG. 14] FIG. 14 is a diagram illustrating an outline of a fifth embodiment.
[FIG. 15] FIG. 15 is a diagram illustrating an outline of a sixth embodiment.
[FIG. 16] FIG. 16 is a diagram illustrating a new access prohibition section at the beginning of an accessible time slot.
[FIG. 17] FIG. 17 is a diagram illustrating a new access prohibition section at the end of the accessible time slot.

### Description of Embodiments

Modes for carrying out the invention will be described below using a plurality of embodiments. These embodiments will be described as related with a vehicle control device. In those embodiments, for the sake of simplicity, an example of a vehicle control device having System on Chips (SoCs) respectively formed on two semiconductor chips and two accelerators will be described, but three or more SoCs may be disposed, and one accelerator or three or more accelerators may be disposed.

### First Embodiment

### <Hardware configuration>

### <Vehicle control device 0>

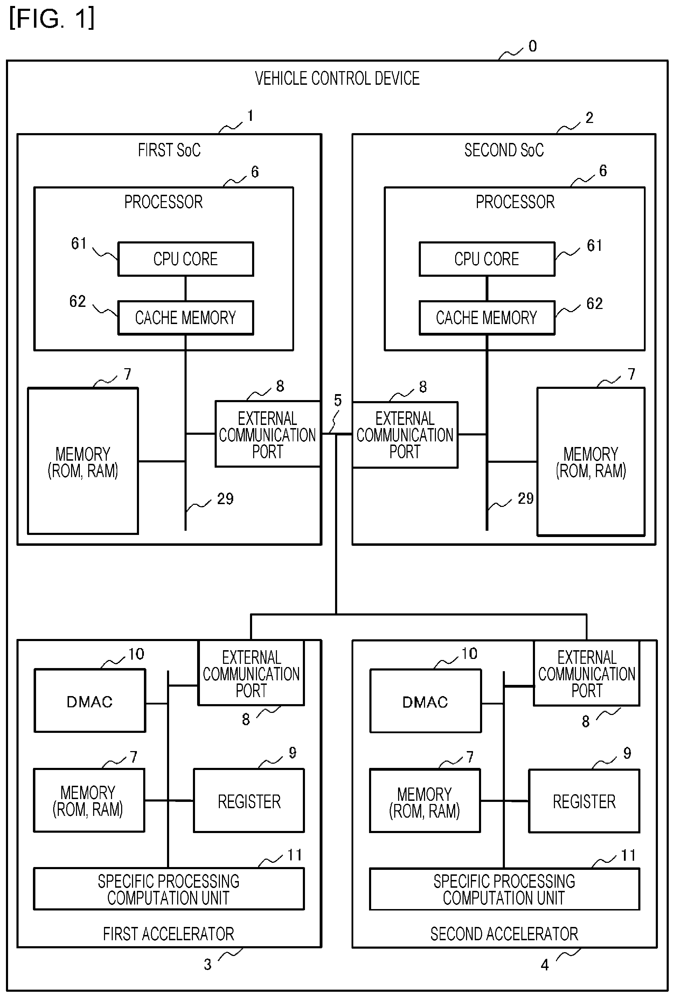

FIG. 1 is a diagram illustrating a hardware configuration of a vehicle control device 0 according to a first embodiment. The hardware configuration of the vehicle control device 0 of the present invention will be described with reference to FIG. 1. The vehicle control device 0 includes an SoC 1 that is a first SoC, an SoC 2 that is a second SoC, an accelerator 3 that is a first accelerator, and an accelerator 4 that is a second accelerator, and they are connected to each other via a communication bus 5. A communication method in the communication bus 5 is not limited. In the present embodiment, for the sake of explanation, this communication method is assumed to be Peripheral Component Interconnect Express (PCIe), which is one of communication methods generally used between an SoC and an accelerator existing outside the SoC. At this time, the SoC 1 and the SoC 2 may be specified as a host in the PCIe, the accelerator 3 and the accelerator 4 may be specified as devices in the PCIe, and they may be connected to each other by a known technique such as a PCIe fabric.

### <Hardware configuration of SoC 1 and SoC 2>

A hardware configuration example of the SoC 1 and the SoC 2 of the present invention will be described with reference to FIG. 1. Each SoC is equipped with a processor 6, a memory 7, an external communication port 8, and an internal bus 29. The processor 6 can include a central processing unit (CPU) core 61 that performs computation processing and a cache memory 62 that temporarily stores data. The memory 7 is a main memory including a read only memory (ROM) and a random access memory (RAM). The external communication port 8 is a port for performing communication using the communication bus 5, and corresponds to a port defined by the PCIe since external communication is performed by the PCIe in the present embodiment. The processor 6, the memory 7, and the external communication port 8 are connected to each other by the internal bus 29 to transmit information.

### <Hardware configuration of accelerator 3 and accelerator 4>

A hardware configuration example of the accelerator 3 and the accelerator 4 according to the present embodiment will be described with reference to FIG. 1. Similarly to the SoCs, each accelerator is equipped with the external communication port 8 and the memory 7. Each accelerator further includes a register 9, a direct memory access controller (DMAC) 10, and a specific processing computation unit 11. Data transmitted from the SoC 1 or the SoC 2 and received by the external communication port 8 of the accelerator 3 or the accelerator 4 is automatically transferred to the memory 7 or the register 9 by the DMAC 10, thereby enabling activation of the specific processing computation unit 11. The specific processing computation unit 11 performs specific processing to be processed instead of the CPU core 61 in the SoC, stores a computation result in the memory 7, and requests the DMAC 10 to transfer the stored computation result. Note that the specific processing to be processed instead of the CPU core 61 specifically corresponds to, for example, image processing, or inference processing in machine learning. Upon receiving a transfer instruction from the specific processing computation unit 11, the DMAC 10 transfers the processing result stored in the memory 7 to the external communication port 8. The processing result is then transmitted to the SoC 1 or the SoC 2.

### <Software configuration>

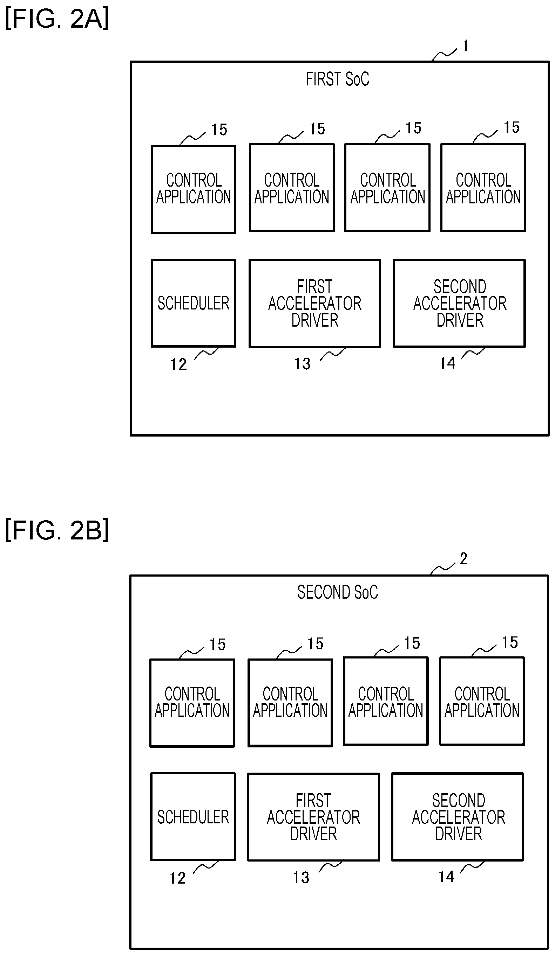

FIG. 2A and FIG. 2B are diagrams illustrating software configurations in the SoC 1 and the SoC 2 before the present invention is applied. The software configurations in the SoC 1 and the SoC 2 before the present invention is applied will be described with reference to FIG. 2A and FIG. 2B.

The SoC 1 and the SoC 2 can include a scheduler 12, an accelerator driver 13 that is a first accelerator driver, an accelerator driver 14 that is a second accelerator driver, and control applications 15 that are one or more control applications. The control applications 15 may be, for example, applications that detect a travel lane from an image acquired from a camera attached to a front of the vehicle, or applications that detect a vehicle or a pedestrian from the image. The scheduler 12 activates each control application 15 at a time (which may be a cycle) set in advance for each control application 15.

The accelerator driver 13 is called from the control application 15, and receives data to be transferred to the accelerator 3 as an access request, that is, a use request from the control application 15 to the accelerator 3. The accelerator driver 13 then transmits the data from the external communication port 8 of the SoC 1 or the SoC 2, to which the accelerator driver 13 belongs, to the external communication port 8 of the accelerator 3 via the communication bus 5. This means that the control application 15 can output a use request to the accelerator 3 via the accelerator driver 13. Further, the accelerator driver 13 receives the processing result from the accelerator 3 and stores the processing result in the memory 7 of the SoC 1 or the SoC 2 to which the accelerator driver 13 belongs. In the present embodiment, since the communication bus 5 uses PCIe, specifically, the accelerator driver 13 generates and transmits a transaction layer packet (TLP) defined by the PCIe. Since it is difficult to store all the transfer data in one TLP, when the control application 15 calls the accelerator driver 13 once, the accelerator driver 13 normally generates a plurality of TLPs.

The accelerator driver 14 is called by the control application 15, and receives data to be transferred to the accelerator 4 as an access request, that is, a use request from the control application 15 to the accelerator 4. The accelerator driver 14 then transmits the data from the external communication port 8 of the SoC 1 or the SoC 2, to which the accelerator driver 14 belongs, to the external communication port 8 of the accelerator 4 via the communication bus 5. This means that the control application 15 can output the use request to the accelerator 4 via the accelerator driver 14. Further, the accelerator driver 14 receives a processing result from the accelerator 4 and stores the processing result in the memory 7 of the SoC 1 or the SoC 2 to which the accelerator driver 14 belongs. In the present embodiment, since the communication bus 5 uses PCIe, specifically, the accelerator driver 14 generates and transmits a TLP defined by the PCIe. Since it is difficult to store all the transfer data in one TLP, when the control application 15 calls the accelerator driver 14 once, the accelerator driver 14 normally generates a plurality of TLPs.

### <Occurrence of access conflict>

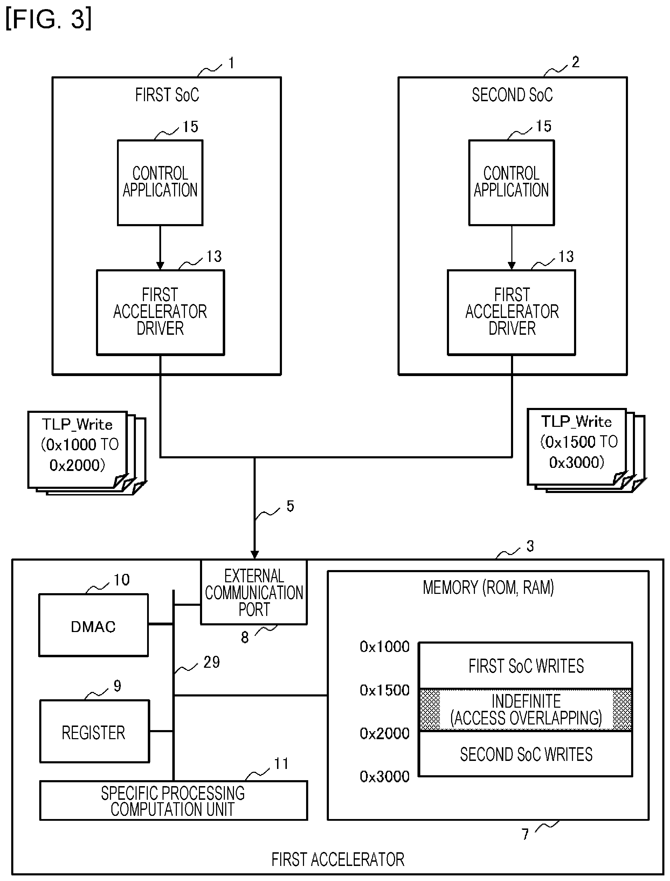

FIG. 3 is a diagram illustrating a state of access conflict occurring in a case where a countermeasure as in the present embodiment is not taken. This access conflict will be described with reference to FIG. 3.

In the example illustrated in FIG. 3, the control application 15 mounted on the SoC 1 calls the accelerator driver 13 mounted on the SoC 1, and sequentially transfers data to regions with addresses 0 x 1000 to 0 x 2000 of the memory 7 mounted on the accelerator 3. At the same time, the control application 15 mounted on the SoC 2 calls the accelerator driver 13 mounted on the SoC 2, and sequentially transfers data to regions with addresses 0 x 1500 to 0 x 3000 of the memory 7 mounted on the accelerator 3. These data transfers are performed using a plurality of packets. At this time, the data from the control application 15 of the SoC 1 is written in the addresses 0 x 1000 to 0 x 1500 of the memory 7 of the accelerator 3, and the data from the control application 15 of the SoC 2 is written in the addresses 0 x 2000 to 0 x 3000. However, to the addresses 0 x 1500 to 0 x 2000, the data of the control application 15 of the SoC 1 or the control application 15 of the SoC 2 is written according to the packet arrival order, and the data becomes undefined. This is the occurrence of access conflict. In this case, the accelerator 3 cannot obtain a correct computation result. Therefore, it is necessary to ensure that one accelerator is not simultaneously accessed by the SoCs.

### <Deterioration in latency due to bypass access>

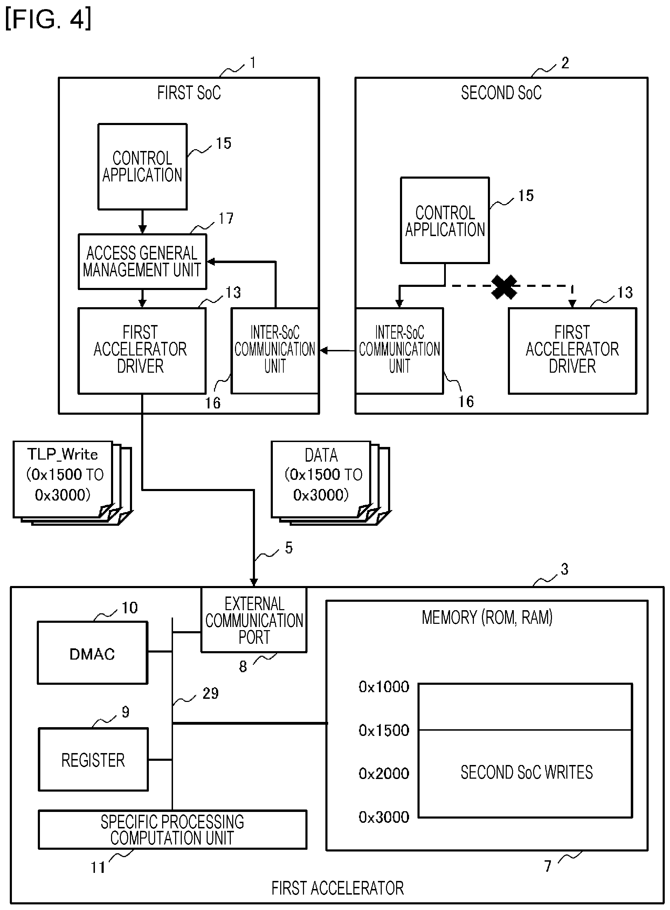

FIG. 4 is a diagram illustrating a state of bypass access occurring in a case where a general management mechanism is disposed in the present embodiment. This bypass access will be described with reference to FIG. 4.

As illustrated in FIG. 4, in a case where an access general management unit 17 is disposed in the SoC 1, all accesses to the accelerator 3 and the accelerator 4 are performed via the access general management unit 17 of the SoC 1. Since all the accesses to the accelerator 3 are performed by the access general management unit 17, the access general management unit 17 can determine that the accelerator 3 is in use until a computation result is received from the accelerator 3 after data is transferred to the accelerator 3, otherwise the access general management unit 17 can determine that the accelerator 3 is not in use (vacant state). In a case of trying to access the accelerator 3, the control application 15 mounted on the SoC 1 calls the access general management unit 17 instead of calling the accelerator driver 13, and temporarily passes, to the access general management unit 17, data to be passed to the accelerator 3. In a case of trying to access the accelerator 3, the control application 15 mounted on the SoC 2 transmits data to be transferred to the SoC 1 using the inter-SoC communication unit 16 mounted on the SoC 2 instead of calling the accelerator driver 13 mounted on the SoC 2, and the inter-SoC communication unit 16 in the SoC 1 passes the data to the access general management unit 17 upon receiving the data. Upon receiving the data, the access general management unit 17 checks the state of the accelerator 3, and if the accelerator 3 is not in use, calls the accelerator driver 13 to start use of the accelerator 3. However, if not, the data is stored in a queue in the access general management unit 17, and when the accelerator 3 becomes in an empty state, the data is extracted from the queue and the accelerator driver 13 is called. As a result, the access conflict as illustrated in FIG. 3 does not occur, and the accelerator 3 can be shared to be used between the control applications 15 mounted on the SoC 1 and the SoC 2. Note that the inter-SoC communication method is serial peripheral interface (SPI) in the present embodiment, but is not limited to the SPI, and any method, such as controller area network (CAN) or Ethernet, may be used as long as communication can be performed between SoCs.

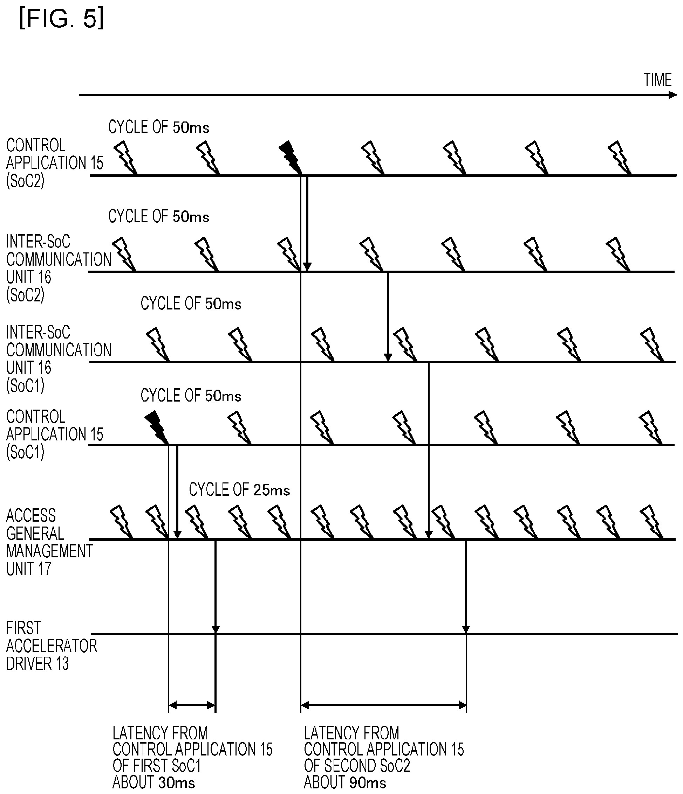

FIG. 5 is a diagram illustrating latency occurring until the control applications 15 of the SoC 1 and the SoC 2 start accessing the accelerator 3 during the bypass access. Deterioration in latency will be described with reference to FIG. 5.

In the present embodiment, each processing is assumed to be periodically activated. Specifically, for example, the control applications 15 and the inter-SoC communication units 16 are assumed to be activated by the schedulers 12 in a cycle of 50 ms, and the access general management unit 17 is assumed to be activated in a cycle of 25 ms. In FIG. 5, lightning-shaped marks indicate timings when the activation is performed by the schedulers 12. The access general management unit 17 is mounted on the SoC 1. At this time, in a case where access to the accelerator 3 is requested from the control application 15 mounted on the SoC 1, the access to the accelerator 3 is started (if the accelerator 3 is not being used by another application) at a timing when the access general management unit 17 is first activated after a timing when the control application 15 is activated (in FIG. 5, the time of the control application 15 (SoC 1) is indicated by a black lightning mark). Therefore, the time until the access to the accelerator 3 is actually started after the control application 15 requests the access, that is, the latency can be roughly estimated to be about 30 ms.

On the other hand, in a case where the control application 15 mounted on the SoC 2 requests access to the accelerator 3, data transfer from the SoC 2 to the SoC 1 is started at a timing when the inter-SoC communication unit 16 of the SoC 2 is first activated after a timing when the control application 15 is first activated. The data is passed to the access general management unit 17 at a timing when the inter-SoC communication unit 16 of the SoC 1 is first activated after a timing when the transfer is completed. Thereafter, the access to the accelerator 3 is started at a timing when the access general management unit 17 is activated (if the accelerator 3 is not being used by another application). Therefore, the time until the access to the accelerator 3 is actually started after the control application 15 requests the access, that is, the latency can be roughly estimated to be about 90 ms. Therefore, when a mechanism for generally managing accesses to the accelerators is disposed in one SoC in order to prevent access conflict, latency in a case where an accelerator is tried to be accessed from an SoC having no mechanism becomes larger than latency in a case where the accelerator is tried to be accessed from the SoC having the mechanism.

Note that the latency can be shortened if an interrupt form is used for a part of the processing, but if the interrupt form is used, other periodic activation tasks are influenced, and thus verification becomes difficult. Further, if the interrupt form is changed, the access from an SoC having no general management mechanism still takes time due to the necessity of the data transfer using the inter-SoC communication. If the access takes time, it is impossible to provide the enhancement of the inference processing speed, which is the purpose of using the accelerators in the present embodiment.

### <Time division access management>

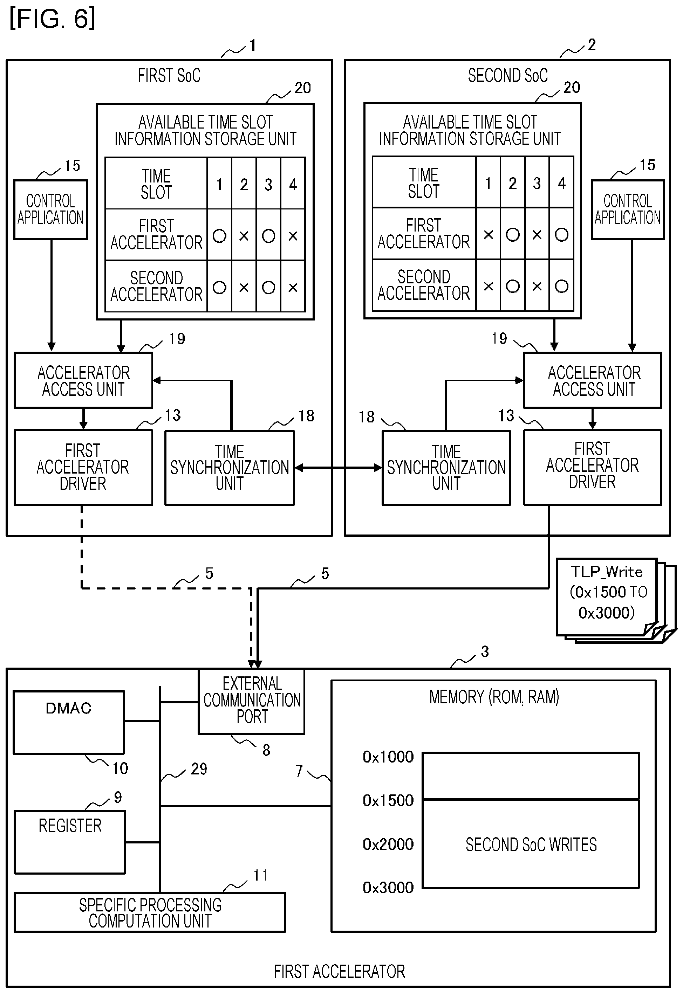

FIG. 6 is a diagram illustrating an outline of the vehicle control device according to the present embodiment. The outline of the vehicle control device according to the present embodiment will be described with reference to FIG. 6. In FIG. 6, illustration of the accelerator 4 and the second accelerator driver 14 is omitted.

In FIG. 6, a time synchronization unit 18 that synchronizes the time between the SoC 1 and the SoC 2 is disposed in each SoC. Further, each SoC includes an accelerator access unit 19 that performs time-division access based on synchronized time, and an available time slot information storage unit 20 that stores information regarding accessibility of each accelerator in each time slot. In general, the time slots are, for example, periodic time sections recognized and defined as being different from each other, and are obtained by dividing an authorization to utilize a resource for each time. Here, as for the time slots, the accessibility to one or more accelerators for at least one of the plurality of SoCs may be periodically defined for each of a plurality of time periods. The time slots each have a constant time width, and the length of the time width in each time slot is 10 ms in the present embodiment. In a table stored in the available time slot information storage unit 20, ∘ indicates accessible ₐₙ^{d ×} indicates inaccessible. Contents of the information stored in the available time slot information storage unit 20 in the SoC 1 and contents of the information stored in the available time slot information storage unit 20 in the SoC 2 are determined in advance so that overlapping access to one accelerator from both the SoCs is prevented. In the case of FIG. 6, the SoC 1 can access the accelerator 3 and the accelerator 4 in odd time slots (1 and 3). At this time, the SoC 2 is inaccessible to the accelerator 3 and the accelerator 4. The SoC 2 can access the accelerator 3 and the accelerator 4 in even time slots (2 and 4). At this time, the SoC 1 is inaccessible to the accelerator 3 and the accelerator 4.

In FIG. 6, four time slots are illustrated, but the first time slot starts after the fourth time slot ends. The time synchronization unit 18 has a function of synchronizing the time between the SoCs. That is, time counting is started at time 0 that is a time point when the vehicle control device 0 is activated and the time synchronization by the time synchronization unit 18 is completed. The first time slot is in a range between time 0 and time less than 10 ms. The second time slot is in a range of 10 ms or more and less than 20 ms, the third time slot is in a range of 20 ms or more and less than 30 ms, and the fourth time slot is in a range of 30 ms or more and less than 40 ms. The first time slot again comes in a range of 40 ms or more and less than 50 ms. In this way, each time during the activation of the vehicle control device 0 is uniquely allocated to any time slot. Upon receiving a request for the access to the accelerator 3 from the control application 15 in the SoC equipped with the accelerator access unit 19, the accelerator access unit 19 checks the current time in the time synchronization unit 18 and determines a time slot in a time period corresponding to the current time (this time slot is referred to as a "current time slot"). FIG. 6 illustrates a state where the current time slot is the second time slot, and illustrates that the SoC 2 can access the accelerator 3 and the SoC 1 cannot access it. The accelerator access unit 19 further refers to the available time slot information storage unit 20 to determine whether the accelerator 3 is available in the current time slot, and transfers data to the accelerator 3 if the accelerator 3 is available and is not being used by another control application of the SoC equipped with the accelerator access unit 19. In a case where the accelerator 3 is used by another application, the data is placed in a queue, and the data is extracted from the queue and transferred when the use by another application is finished. As described above, in response to the use request regarding the accelerator 3 from the control application 15, the accelerator access unit 19 determines whether to transfer the use request to the accelerator 3, based on the information about the accessibility in the time slot in the time period corresponding to the current time. Note that, in the present embodiment, the case where each SoC includes the time synchronization unit 18 and the time is synchronized between the SoCs has been described. However, the time synchronization unit 18 may not be disposed as long as the time is synchronized between the SoCs. For example, the time may be synchronized between the SoCs by simultaneously activating the SoCs at an initial stage.

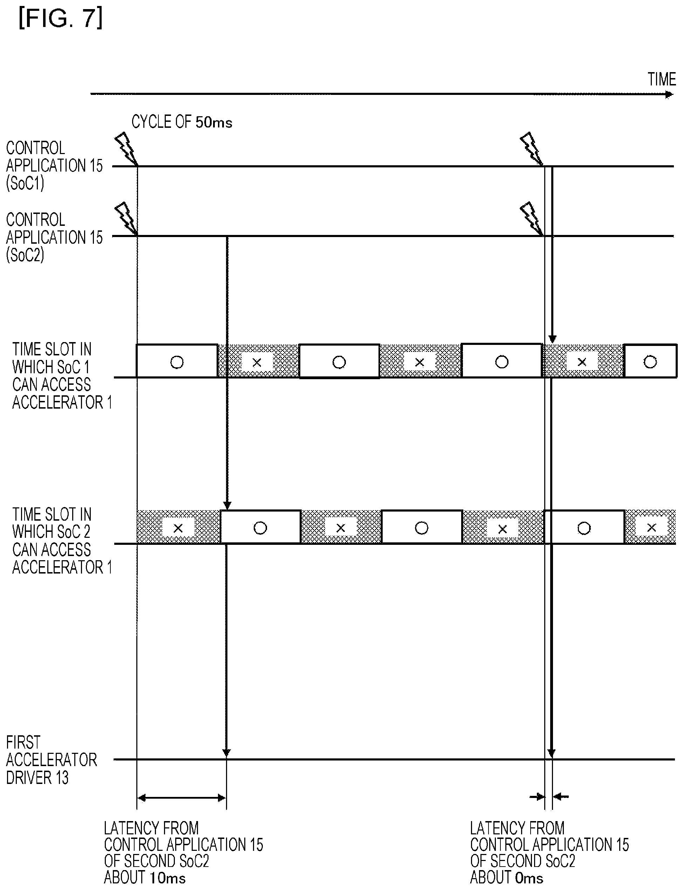

FIG. 7 is a diagram illustrating latency occurring until the control applications 15 of the SoC 1 and the SoC 2 start accessing the accelerator 3 in the case of FIG. 6. This latency will be described with reference to FIG. 7.

In FIG. 7, as for the time slots in which the SoC 1 can access the accelerator 1 and the time slots in which the SoC 2 can access the accelerator 1, the first time slot, the second time slot, ... are arranged from the left, respectively. As for each time slot, "∘" indicates an accessible time slot, and "X" indicates an inaccessible time slot. Lightning-shaped marks indicate timings when the control applications 15 are activated by the schedulers 12. Similarly to FIG. 5, in the present embodiment, since the control applications 15 are executed in a cycle of 50 ms, the lightning-shaped mark is generated every 50 ms. In the present embodiment, since the length of the time width of each time slot is 10 ms, five time slots exist between the lightning-shaped marks.

As illustrated in FIG. 7, in a case where the schedulers 12 activate the control applications 15 of the SoC 1 and the SoC 2, respectively, in a cycle of 50 ms, the current time slots at a time when the control applications 15 are activated are either odd-numbered time slots or even-numbered time slots. At the time of the lightning-shaped marks on the left side of FIG. 7, since the current time slots are odd-numbered time slots, the SoC 1 can use the accelerator and the SoC 2 cannot use it. After 10 ms have elapsed, the current time slots are even-numbered time slots, and the SoC 2 can use the accelerator. Therefore, the latency occurring until the control application 15 of the SoC 2 can use the accelerator after requesting for the access to the accelerator is about 10 ms, which is 1/9 as compared with about 90 ms in FIG. 5. Further, at the time of the lightning-shaped marks on the right side of FIG. 7, since the current time slots are even-numbered time slots, the SoC 1 cannot use the accelerator and the SoC 2 can use it. Therefore, the control application 15 of the SoC 2 can immediately use the accelerator, and thus the latency is almost 0.

According to the present embodiment, since the access to the accelerator from each SoC is time-divided in advance, even if each SoC directly accesses a corresponding accelerator, access conflict between the SoCs does not occur, thus producing an effect of efficiently sharing the accelerator between the SoCs.

### Second Embodiment

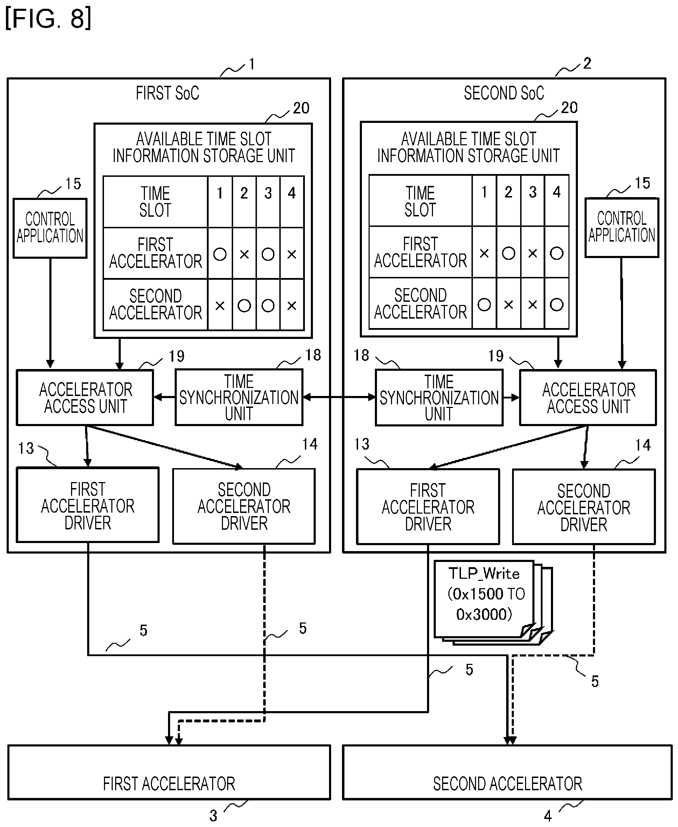

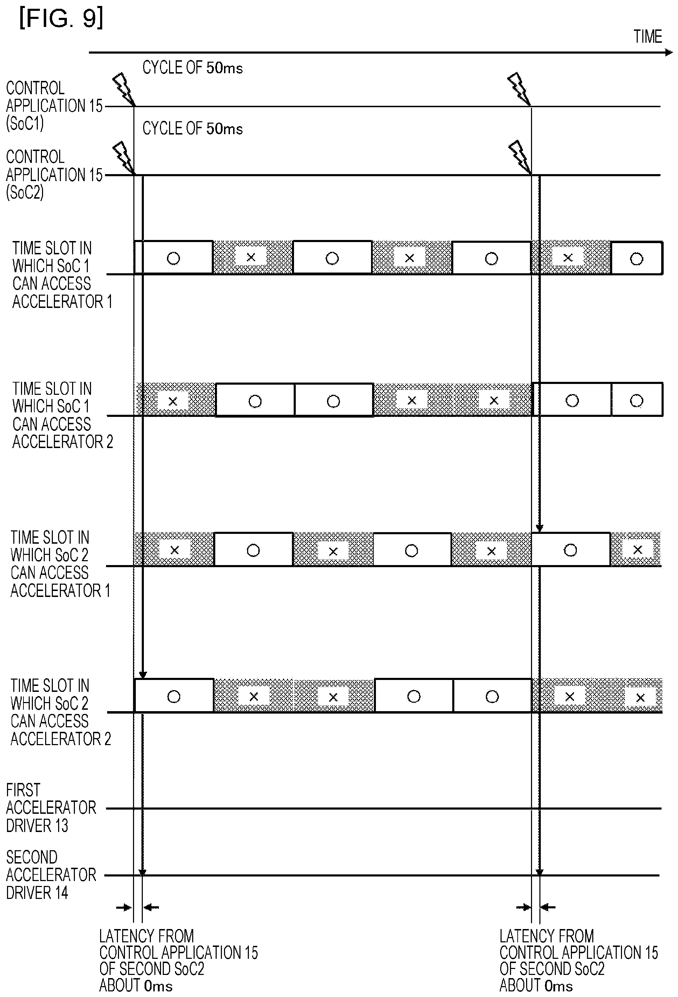

A second embodiment of the vehicle control device of the present invention will be described with reference to FIGS. 8 and 9. The second embodiment is different from the first embodiment in that each control application 15 calls the accelerator access unit 19 without being conscious of which of the accelerator 3 and the accelerator 4 is used. Note that the components similar to those in the first embodiment are denoted by the identical reference numerals, and the description thereof will be omitted.

### <Time division access management>

FIG. 8 is a diagram illustrating an outline of time slot allocation in the present embodiment. In the case of FIG. 8, the SoC 1 can access the accelerator 3 in the first time slot, the accelerator 4 in the second time slot, and the accelerator 3 and the accelerator 4 in the third time slot. Further, the SoC 2 can access the accelerator 4 in the first time slot, the accelerator 3 in the second time slot, and the accelerator 3 and the accelerator 4 in the fourth time slot. Upon receiving an access request from the control application 15 in the SoC equipped with the accelerator access unit 19, the accelerator access unit 19 checks a current time in the time synchronization unit 18 and determines a time slot (current time slot) corresponding to the current time. The accelerator access unit 19 further refers to the available time slot information storage unit 20 to specify accelerators available in the current time slot, and transfers data to any accelerator of the specified accelerators if this accelerator is not used by another application. In a case where all accelerators are used by the other applications, the data is placed in a queue, and the data is extracted from the queue and transferred when the use by the other applications is finished.

FIG. 9 is a diagram illustrating latency occurring until the control applications 15 of the SoC 1 and the SoC 2 start accessing the accelerator 3 and the accelerator 4 in the case of FIG. 8.

In FIG. 9, each control application 15 does not specify in advance which accelerator is to be accessed. Instead, the accelerator access unit 19 finds an accelerator that is available in the current time slot or a time slot closest to the current time slot, and transfers data to either the found accelerator 3 or accelerator 4. As a result, the control application 15 does not need to consider time division for an accelerator. In the present embodiment, since the activation cycle of the control applications 15 is 50 ms and the time division cycle of the accelerators (that is, the number of time slots * 10 ms in a table stored in the available time slot information storage unit 20) is 40 ms, the time slots in which the control applications 15 are activated are not fixed. Therefore, as illustrated in FIG. 9, activation may be performed in the first time slot in some occasions and in the second time slot on others, or the like. In such a case, when the control application 15 determines which accelerator is to be used, the determination needs to be made for each time slot of activation in accordance with occasions, and thus the scheduling becomes complicated. Therefore, selection of an accelerator is left to the accelerator access unit 19. As described above, the accelerator access unit 19 searches for an accelerator available in the current time slot or the time slot closest to the current time slot, and transfers data to that accelerator. Therefore, in a case of the timing of the lightning-shaped marks on the left side of FIG. 9, that is, in a case where the control application 15 of the SoC 2 is activated in the first time slot, the data is transferred to the accelerator 4. In a case of the timing of the lightning-shaped marks on the right side of FIG. 9, that is, in a case where the control application 15 of the SoC 2 is activated in the second time slot, the data is transferred to the accelerator 3.

According to the present embodiment, the selection of an accelerator can be dynamically changed so that the latency is the smallest while complication of the scheduling is being avoided. This complication is caused by a fact that the time division cycle of an accelerator and the activation cycle of the control application are not an integral multiple.

### Third Embodiment

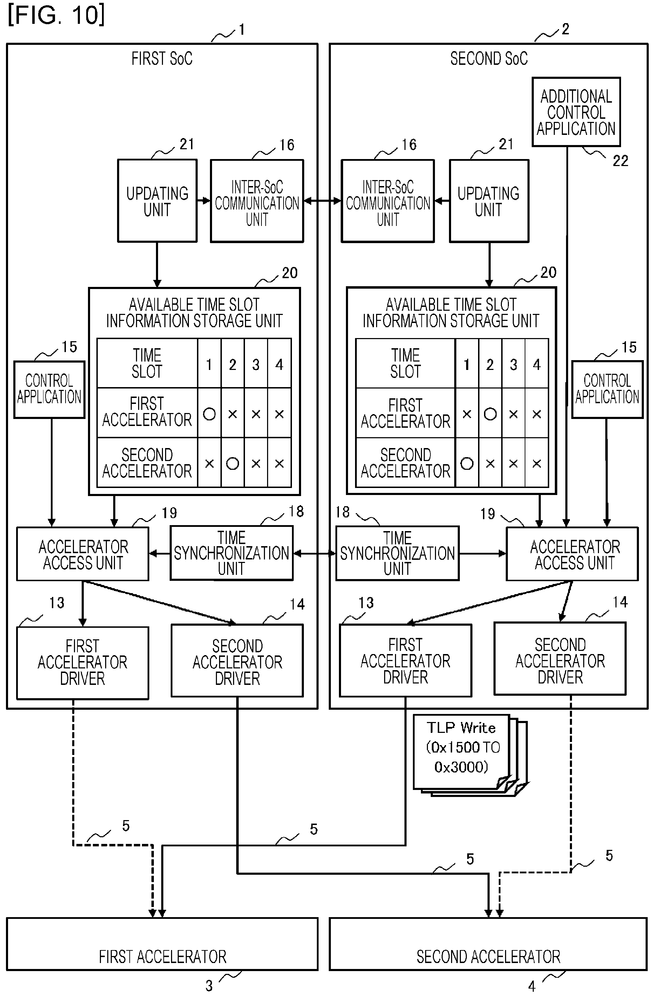

A third embodiment of a vehicle control device of the present invention will be described with reference to FIGS. 10 to 12. The third embodiment is different from the second embodiment in that information stored in the available time slot information storage unit 20 is updated. Note that the components similar to those in the first or second embodiment are denoted by the identical reference numerals, and the description thereof will be omitted.

### <Time division access management>

FIG. 10 is a diagram illustrating an outline of the vehicle control device according to the present embodiment. In FIG. 10, the SoC 1 and the SoC 2 each include the inter-SoC communication unit 16 and a time slot information updating unit 21. The time slot information updating unit 21 has a function of updating the information about the time slots stored in the time slot information storage unit.

The information stored in the available time slot information storage units 20 of the SoC 1 and the SoC 2 indicates that neither of the SoCs accesses any accelerator in the third time slot and the fourth time slot, that is, both the SoCs cannot access any accelerator. Hereinafter, such time slots are referred to as spare time slots. The spare time slots are time slots in which any SoC is cannot access at least one specific accelerator in the accelerators. The spare time slots are time slots that are set aside as spare, and the spare time slots can be allocated to the SoC 1 and the SoC 2 as necessary. The time slot information updating unit 21 has a function of updating information stored in the available time slot information storage unit 20. In the present embodiment, the SoC 2 includes an additional new control application 22. The additional control application 22 is a control application that has not been mounted before, and is added along with the update of the vehicle control. The additional control application 22 uses an accelerator similarly to the control application 15. Therefore, the addition of the additional control application 22 increases the frequency with which the SoC 2 uses an accelerator. Therefore, the time slot information updating unit 21 can update the third time slot that is the spare time slot so that the SoC 2 can use the accelerator 3. At this time, the information stored in the available time slot information storage unit 20 of the SoC 2 is updated, and if the information is not transmitted to the SoC 1, the additional control application 22 is mounted on the SoC 1 later. The time slot information updating unit 21 of the SoC 1 performs updating so that the accelerator 3 can be accessed in the third time slot, and as a result, time-division access could maybe fail due to overlapping access. That is, when the information stored in the available time slot information storage unit 20 is updated, the above problem can be solved by notifying the time slot information updating unit 21 mounted on each SoC that the information is updated.

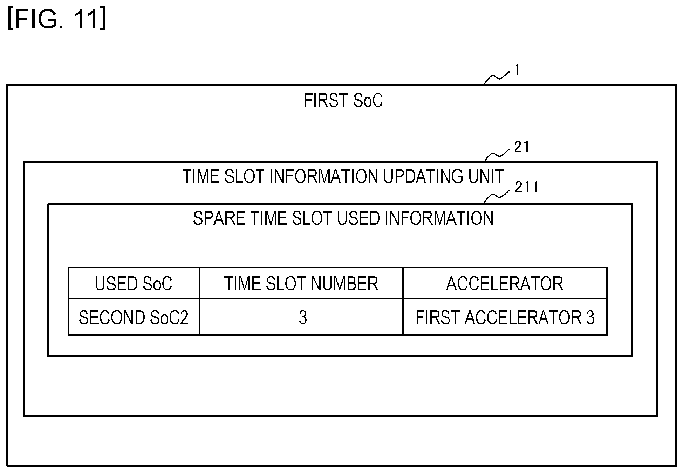

FIG 11 is a diagram illustrating spare time slot used information 211 internally managed by the time slot information updating unit 21. In FIG. 11, upon receiving information about the use of a spare time slot from the time slot information updating unit 21 of another SoC via the inter-SoC communication unit 16, the time slot information updating unit 21 records, in the spare time slot used information 211, the time slot as an inaccessible time slot. In the present embodiment, the SoC 2 enables the access to the accelerator 3 from the SoC 2 in the third time slot, which is a spare time slot, for the additional control application 22. Therefore, the SoC 2 as a SoC in use, 3 as the time slot number, and the accelerator 3 are recorded in the spare time slot used information 211 in the time slot information updating unit 21 of the SoC 1. With reference to this information, the SoC 1 can be prevented from using the spare time slot already used by the SoC 2 in the future. In the present embodiment, the spare time slot used information 211 is not an essential component. In a case where overlapping use of accelerators does not occur between the SoCs even without the spare time slot used information 211, the operation and effect of the present embodiment are exerted as long as the other necessary components are provided even without the spare time slot used information 211.

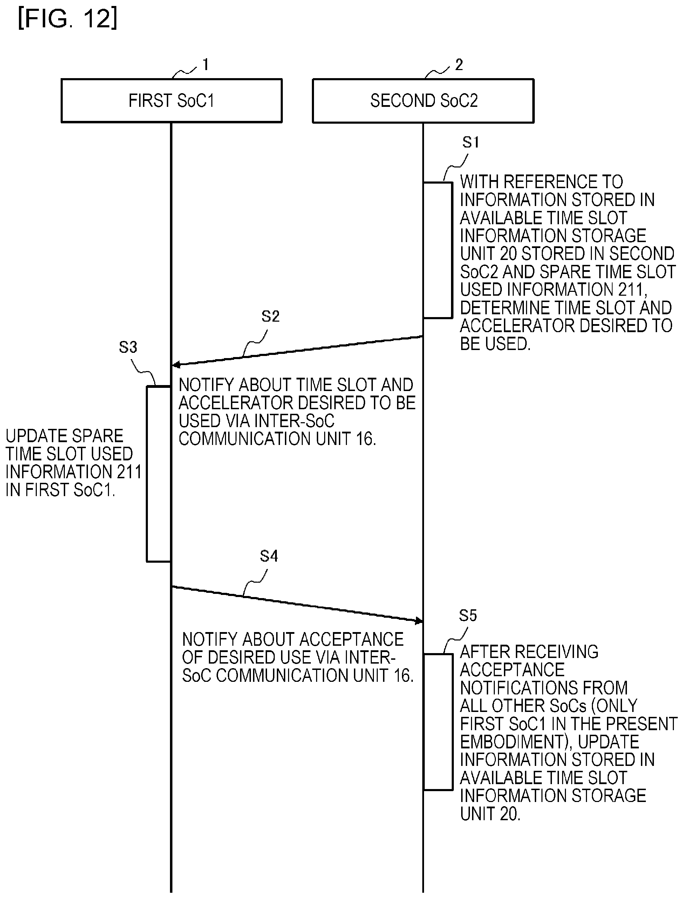

FIG. 12 is a diagram illustrating an example of a flow of processing performed between the SoC 1 and the SoC 2 when the SoC 2 updates a time slot in the present embodiment.

In step S1, the SoC 2 determines a time slot and an accelerator to be newly used. Hereinafter, this is referred to as a desired use time slot. The desired use time slot can be determined with reference to the information stored in the available time slot information storage unit 20 and the spare time slot used information 211. In the present embodiment, with reference to the available time slot information storage unit 20, it can be seen that the third time slot and the fourth time slot are empty time slots, and since no information is stored in the spare time slot used information 211, it can be seen that neither the third time slot nor the fourth time slot is used by another SoC. Therefore, the SoC 2 desires to use the accelerator 3 in the third time slot. At this time point, the SoC 2 is still inaccessible to the accelerator 3 in the third time slot. In step S2, the information about the desired use time slot determined in step S1 is transmitted to all the other SoCs (the SoC 1 in the present embodiment) using the inter-SoC communication unit 16, and is notified. This is that the time slot information updating unit 21 of the SoC 2, which is one SoC, notifies the time slot information updating unit 21 belonging to another SoC of a request for updating one spare time slot of the SoC 2 to a time slot in which the SoC 2 can access the accelerator 3. Upon receiving the information about the desired use time slot, the SoC 1 proceeds to step S3. In step S3, the SoC 1 writes data in the spare time slot used information 211 in the time slot information updating unit 21 mounted on the SoC 1 as illustrated in FIG. 11. When this writing is completed, the processing proceeds to step S4, and the SoC 2 is notified of the acceptance of the use request by using the inter-SoC communication. The SoC 2 proceeds to step S5, and when receiving the acceptance notification from all the other SoCs (only the SoC 1 in the present embodiment), the SoC 2 updates the information stored in the available time slot information storage unit 20, and updates the access to the accelerator 3 in the third time slot from unavailable (×) to available (∘). Thereafter, the SoC 2 can access to the accelerator 3 in the third time slot.

In a case where the additional control application 22 is added to the SoC 2 as described above, in the processing for updating the spare time slot to be available, that is, to be accessible, in a case where the computation load of the accelerator 3 accessed by the SoC 2 exceeds or has exceeded a predetermined load, the time slot information updating units belonging to the other SoCs may be notified and perform updating.

According to the present embodiment, in a case where the processing load of each SoC varies due to the updating by the control application or the like and the frequency with which each SoC uses an accelerator changes, the time division is dynamically changed so that more time slots are allocated to an SoC where the frequency of accessing an accelerator increases while the time division between the SoCs is being maintained, and the accelerator can be efficiently used even after the variation in the processing load.

### Fourth Embodiment

A fourth embodiment of the vehicle control device of the present invention will be described. The fourth embodiment is different from the third embodiment in that an accelerator temperature measurement unit is disposed instead of the additional control application. Note that the components similar to those in the third embodiment are denoted by the identical reference numerals, and the description thereof will be omitted.

### <Dynamic allocation change for heat dissipation>

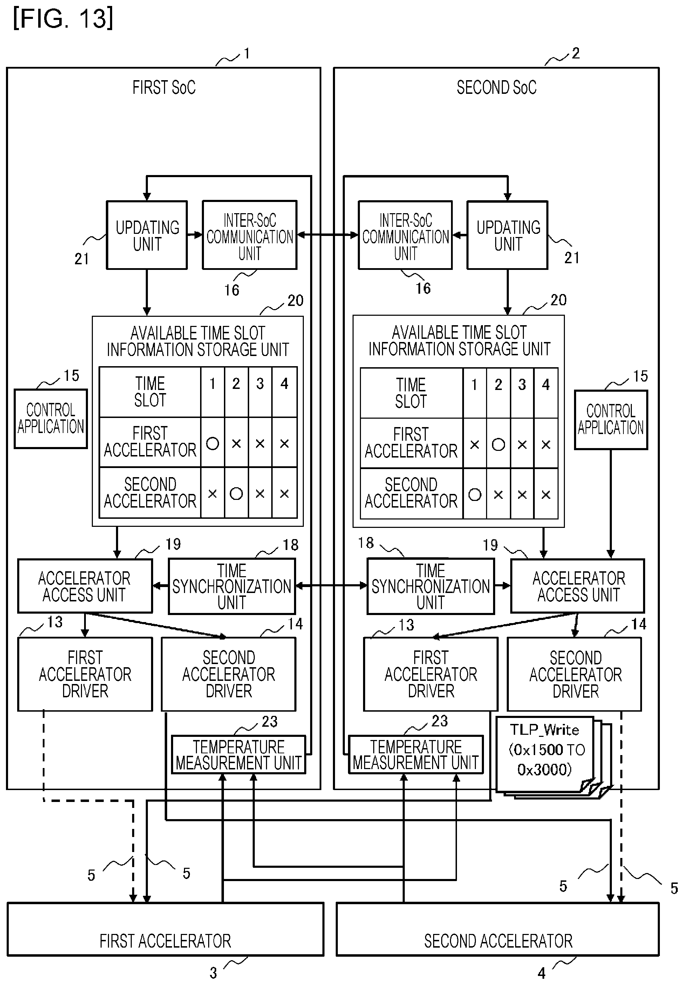

FIG. 13 is a diagram illustrating an outline of the present invention in the fourth embodiment. The fourth embodiment will be described with reference to FIG. 13.

The SoC 1 and the SoC 2 each includes a temperature measurement unit 23. The temperature measurement units 23 respectively measure the temperatures of the accelerator 3 and the accelerator 4, and when the temperature of an accelerator exceeds a certain threshold, notify the time slot information updating unit 21 of information about the accelerator having the temperature exceeding the threshold. The time slot information updating unit 21 stops using the accelerator having the temperature exceeding the preset threshold, and reallocates, to another accelerator, a time slot in which the accelerator is accessed. This accelerator to which the time slot is reallocated can be switched to an accelerator having a temperature not exceeding the preset threshold. For example, in the case of FIG. 13, in a case where the temperature of the accelerator 3 exceeds the preset threshold, the time slot information updating unit 21 reallocates the time slot in which the accelerator 3 is used to the accelerator 4. In a case where the SoC 1 changes a time slot, the SoC 1 has used the accelerator 3 in the first time slot. Therefore, the time slot information updating unit 21 of the SoC 1 changes this time slot to unavailable, that is, inaccessible (×), and desires to use the accelerator 4 in the third time slot that is the spare time slot. The change of the first time slot and the third time slot may be updated according to the procedure described in the third embodiment. This is, this update can be performed in a manner that the time slot information updating unit 21 of the SoC 1 notifies the time slot information updating unit 21 belonging to the other SoC of the request for updating the third time slot as the spare time slot of the SoC 1 to a time slot in which the control application 15 of the SoC 1 can access the accelerator 4. Similarly, in the case of the SoC 2, the SoC 2 uses the accelerator 3 in the second time slot. Therefore, the time slot information updating unit 21 changes this time slot to unavailable, that is, inaccessible (×), and desires to use the accelerator 4 in the fourth time slot as the spare time slot. The change of the second time slot and the fourth time slot may be updated according to the procedure described in the third embodiment. This is, this update can be performed in a manner that the time slot information updating unit 21 of the SoC 2 notifies the time slot information updating unit 21 belonging to the other SoC of the request for updating the fourth time slot as the spare time slot of the SoC 2 to a time slot in which the control application 15 of the SoC 2 can access the accelerator 4. Here, in order to cope with a case where an accelerator becomes unusable due to a failure or the like, a failure or the like detection unit may be disposed instead of the temperature measurement unit 23.

According to the present embodiment, in a case where one accelerator becomes unusable due to overheating, failure, or the like, the time-division access is changed so that another available accelerator is used, which produces an effect of enhancing the availability as vehicle control.

### Fifth Embodiment

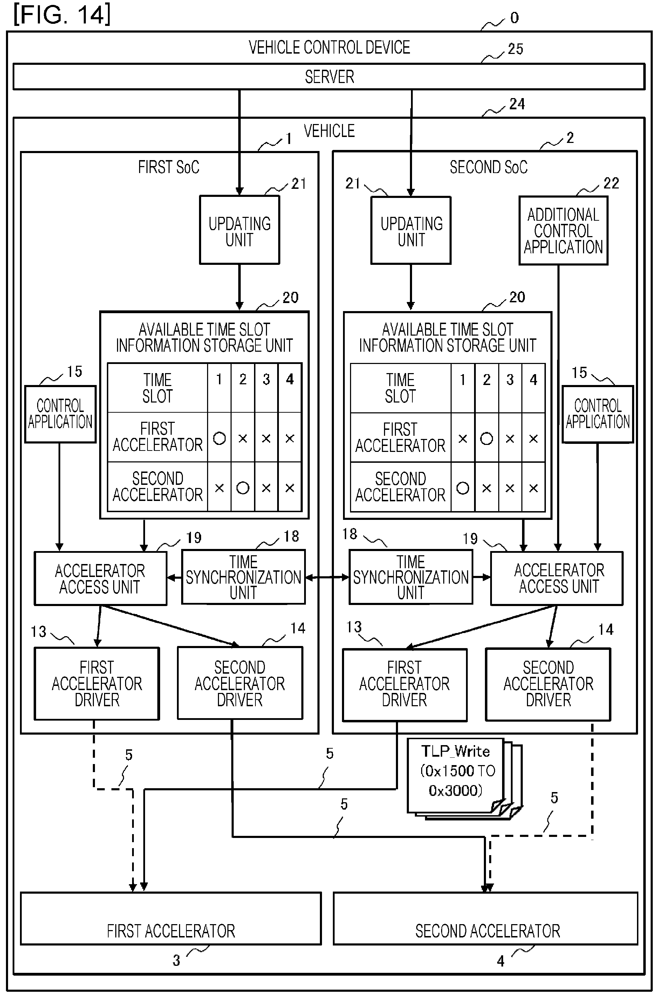

A fifth embodiment of the vehicle control device of the present invention will be described with reference to FIG. 14. The fifth embodiment is different from the third embodiment in that the time slot allocation update is not accepted between the SoCs, but the available time slot information after the update is directly received from the outside, for example, from a server, and the update is performed. Note that the components similar to those in the third embodiment are denoted by the identical reference numerals, and the description thereof will be omitted.

### <Vehicle control device 0>

FIG. 14 is a diagram illustrating an outline of the fifth embodiment. In FIG. 14, the vehicle control device 0 includes a vehicle 24 and a server 25. The vehicle 24 includes the SoC 1, the SoC 2, the accelerator 3, the accelerator 4, and the communication bus 5. The server 25 transmits updated available time slot information to the time slot information updating unit 21 of each SoC.

### <Server 25>

The server 25 transmits available time slot information allocated to each SoC so that overlapping is avoided. Here, each SoC may directly communicate with the server 25, or may communicate via a gateway or the like for external communication installed in the vehicle.

### <Time slot information updating unit 21>

The time slot information updating unit 21 according to the present embodiment stores the available time slot information received from the server as it is in the available time slot information storage unit 20. In the server 25, since the allocation of the time slots is determined so as not to overlap, the procedure illustrated in FIG. 12 of accepting the inquiry about desired use with the inter-SoC communication is unnecessary.

According to the present embodiment, the available time slot information can be updated without the necessity for the inter-SoC communication. In the present embodiment, the case where the available time slot information after the update is received from the server and updated has been exemplified. However, this is not limited to the server, and the time slot information stored in the time slot information storage unit may be updated based on the information regarding the accessibility in the time slot, the information being received from the outside of the vehicle equipped with the vehicle control device. For example, instead of the above-described server, a portable terminal may be used.

### Sixth Embodiment

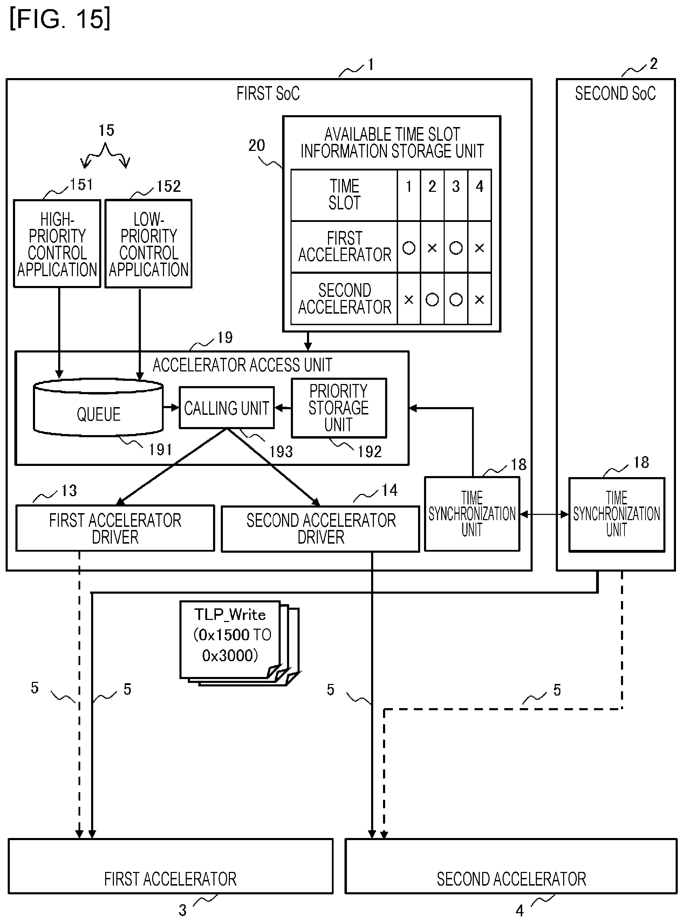

FIG. 15 is a diagram illustrating an outline of a sixth embodiment of the vehicle control device according to the present invention. The sixth embodiment will be described with reference to FIG. 15.

The sixth embodiment is different from the first embodiment in that an access unit considers priority between control applications. The components in the sixth embodiment similar to those in the first embodiment are denoted by the identical reference numerals, and the description thereof will be omitted. In FIG. 15, as for the SoC 2, the components other than the time synchronization unit 18 are not illustrated.

### <Time division access management>

The accelerator access units 19 of the SoC 1 and the SoC 2 each include a queue 191, a priority storage unit 192, and a calling unit 193. The control applications 15 include a high-priority control application 151 where high priority is set by the priority storage unit 192 and a low-priority control application 152 where a low priority is set. That is, for the plurality of applications, priority is set for the request for the access to accelerators, that is, the use request. When receiving the request for access to an accelerator from the high-priority control application 151 or the low-priority control application 152 in a time period in which a current time corresponds to the fourth time slot, the accelerator access unit 19 stores the request in the queue 191. When the current time is the first time slot, the calling unit 193 checks the queue 191 and the priority storage unit 192. In a case where the requests for access have been respectively received from both the high-priority control application 151 and the low-priority control application 152, the request for access from the high-priority control application 151 is first processed. After the accelerator 3 completes the processing of the request for access from the high-priority control application 151, the request for access from the low-priority control application 152 is processed. In this case, when the request for the access to a certain accelerator is received from an application in a time slot of an inaccessible accelerator, the accelerator access unit may output the received use requests to the first accelerator in descending order of priority at a timing when the time slot of the inaccessible accelerator is switched to the time slot of an accessible accelerator.

In a case where the access request has been received from only one of the high-priority control application 151 and the low-priority control application 152, the access request is processed. Although the example described here relates to a case where two priorities, namely, high priority and low priority exist, two or more priorities may exist. Similarly, in the case where two or more priorities exist for the control applications, the processing is preferentially performed for the control applications having higher priority depending on the priorities. In the processing of the access requests from the control applications 15 such as the high-priority control application 151 and the low-priority control application 152, a determination may be made whether the corresponding accelerator access unit outputs the access request, that is, the use request to an accelerator to be accessed, that is, to be used.

According to the present embodiment, in a case where the plurality of control applications tries to use the accelerators, the accelerators can be used so that the latency of the control application with high priority is shortened.

### Seventh Embodiment

A seventh embodiment of the vehicle control device of the present invention will be described with reference to FIG. 15. The seventh embodiment is different from the sixth embodiment in that the use of the accelerators by the low-priority control application is stopped in a case where the high-priority control application issues a request for the access to the accelerators. Note that the components in the seventh embodiment similar to those in the sixth embodiment are denoted by the identical reference numerals, and the description thereof will be omitted.

### <Time division access management>

A case similar to that in FIG. 15 will be considered. The accelerator access unit 19 of the SoC 1 is assumed to receive a request for access to an accelerator from the low-priority control application 152 in a time period in which a current time corresponds to the fourth time slot, and not to receive an access request from the high-priority control application 151. When the current time is the first time slot, the calling unit 193 extracts, from the queue 191, the access request from the low-priority control application 152, and starts using the accelerator 3. Immediately after that, the accelerator access unit 19 of the SoC 1 is assumed to receive an access request from the high-priority control application 151. At this time, the calling unit 193 of the accelerator access unit 19 of the SoC 1 commands the accelerator 3 to stop the processing using the accelerator driver 13, and transfers the access request from the high-priority control application 151 to the accelerator 3. The access request from the low-priority control application 152 is temporarily canceled and stored again in the queue 191. After the high-priority control application 151 finishes using the accelerator 3, the access request from the low-priority control application 152 is processed. Here, the accelerator 3 may be commanded to stop the processing by outputting a processing interruption command to the accelerator 3.

According to the present embodiment, priority reversal caused by occupation of the accelerator by the control application with low priority can be eliminated and the control application with high priority can use the accelerator with low latency.

### Eighth Embodiment

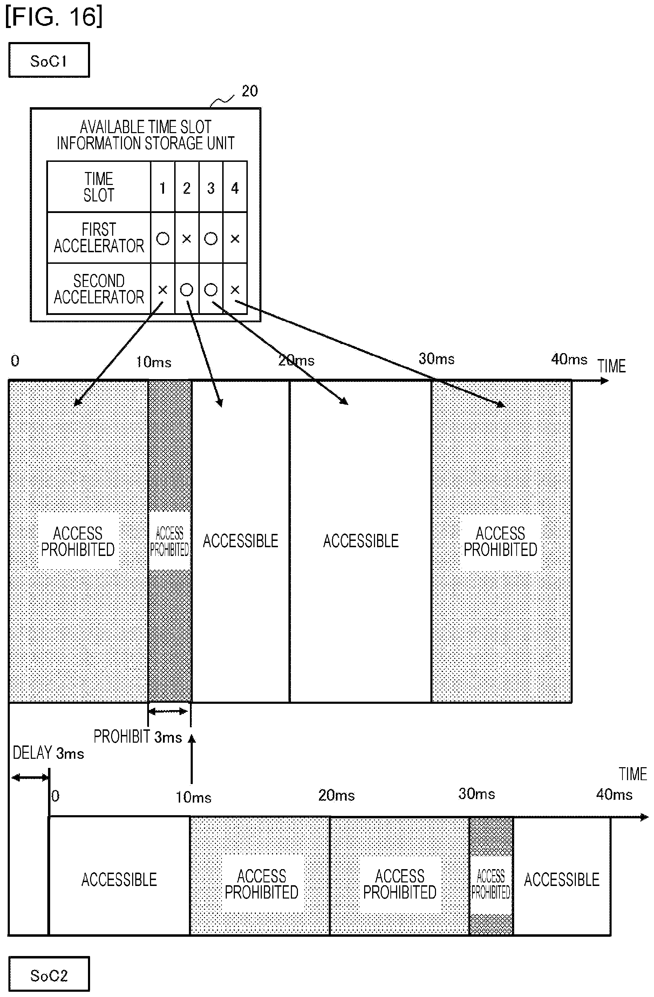

An eighth embodiment of the vehicle control device of the present invention will be described with reference to FIG. 16. The eighth embodiment is different from the first embodiment in that an accelerator driver is not called at the beginning of the available time slot. Note that the components in the eighth embodiment similar to those in the first embodiment are denoted by the identical reference numerals, and the description thereof will be omitted.

### <New access prohibition section>

FIG. 16 is a diagram describing the necessity of a new access prohibition section at the beginning of the accessible time slot. In FIG. 16, among two graphs of time and accessibility to the accelerators on upper and lower sides, the upper graph relates to the second accelerator of the SoC 1, and the lower graph relates to the second accelerator of the SoC 2.

In general, since different SoCs have different clock generation sources, it is difficult to always perform accurate time synchronization among a plurality of SoCs. That is, a time error within a certain range is present between the plurality of SoCs. In the present embodiment, the maximum value of this error is assumed to be 3 ms. As illustrated in FIG. 16, the time of the SoC 2 is assumed to be delayed from the time of the SoC 1 by 3 ms. At this time, time 10 ms in the SoC 2 corresponds to time 13 ms in the SoC 1. Here, when the SoC 1 starts accessing the accelerator 4 at its own time 10 ms, the SoC 2 could be maybe still using the accelerator 4 since the time is 7 ms in the SoC 2, and an access conflict might occur. Therefore, when the access prohibition time slot is switched to the accessible time slot, the access to the accelerator, that is, the use request is not made for the first 3 ms. In the above description, the case where the time of the SoC 2 is delayed from the time of the SoC 1 has been described. However, the same applies to a case where the time of the SoC 1 is delayed from the time of the SoC 2, that is, a case where the time of the SoC 2 is ahead of the time of the SoC 1. FIG. 16 illustrates an example where an access prohibition time period is provided in the fourth time slot of the SoC 2 according to a rule that, when switching is performed from the access prohibition time slot to the accessible time slot, the access to an accelerator is not performed for a time corresponding to the time error at the beginning of the accessible time slot. The access prohibition time period provided with the fourth time slot of the SoC 2 is effective in a case where the time of the SoC 2 is ahead of the time of the SoC 1.

According to the present embodiment, occurrence of the access conflict for the accelerators is prevented when an error is present in time synchronization between the SoCs. Ninth Embodiment

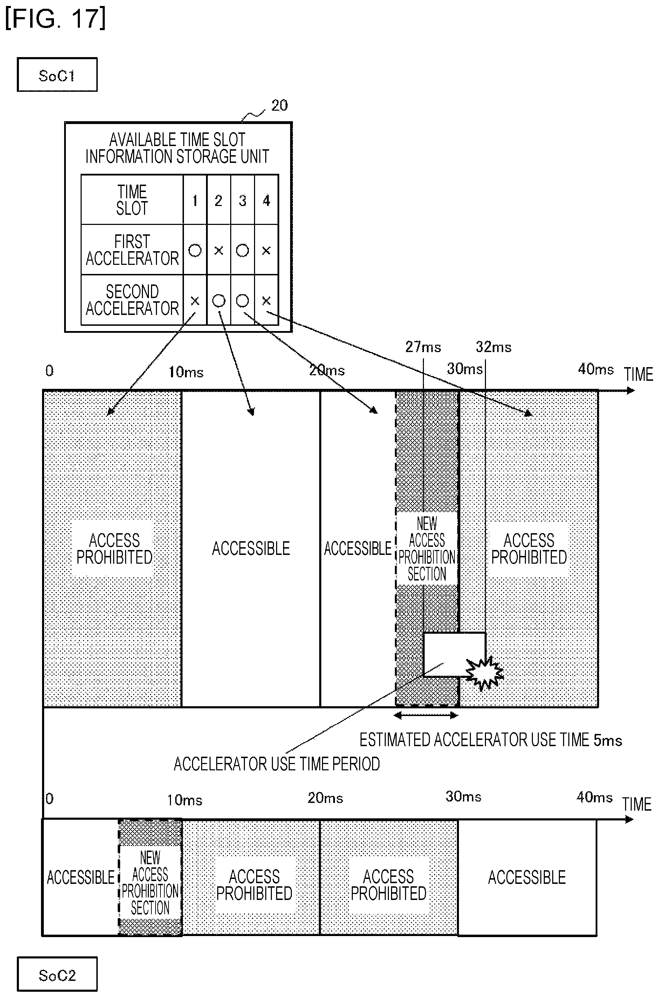

A ninth embodiment of the vehicle control device of the present invention will be described with reference to FIG. 17. The ninth embodiment is different from the eighth embodiment in that access to the accelerator driver is not performed at the end of the available time slot. The components in the ninth embodiment similar to those in the eighth embodiment are denoted by the identical reference numerals, and the description thereof will be omitted.

### <New access prohibition section>

FIG. 17 is a diagram describing the necessity of a new access prohibition section at the end of the accessible time slot. In FIG. 17, among two graphs of time and accessibility of the access to the accelerators on upper and lower sides, the upper graph relates to the second accelerator of the SoC 1, and the lower graph relates to the second accelerator of the SoC 2.

In the present embodiment, the control applications are assumed to use the accelerators for a maximum of 5 ms. As illustrated in FIG. 17, in a case where the control application 15 of the SoC 1 starts using the accelerator 4 at time 27 ms, the use could maybe end at time 32 ms. Since this time is an accessible time slot of the SoC 2 as illustrated in FIG. 17, an access conflict might occur. Therefore, when the accessible time slot is switched to an inaccessible time slot, new access to an accelerator is assumed not to be performed for the last 5 ms. The time during which new access to an accelerator is not performed can be referred to as an access prohibition time. That is, in the information about the accessibility in the time slots, the accelerator access unit may not start the output of the use request within the access prohibition time back from the end of the accessible time slot in a case where the accessible time slot is switched to the inaccessible time slot. The access prohibition time depends on the length of time during which an application uses an accelerator, and can be, for example, a maximum time during which the application is assumed to use the accelerator. The access prohibition time may be set in a time slot in the information about the accessibility in the time slots. In addition, the processing for prohibiting new access to an accelerator is similarly applied to any accelerator of any SoC.

According to the present embodiment, each control application is prevented from using an accelerator beyond an available time slot.

Note that the present invention is not limited to the above-described embodiments, and includes various modifications and equivalent configurations within the spirit of the appended claims. For example, the above-described embodiments have been described in detail for easy understanding of the present invention, and the present invention is not necessarily limited to those having all the described configurations. A part of the configuration in one embodiment may be replaced with the configuration in another embodiment. Further, the configuration in the other embodiment may be added to the configuration in one embodiment. In addition, other configurations may be added to and deleted from some of the configurations in the embodiments, and some of the configurations in the embodiments can be replaced with the other configurations.

Further, a part or all of the above-described configurations, functions, processing units, processing means, and the like may be achieved by hardware by, for example, designing with an integrated circuit, or may be achieved by software by a processor to interpret and execute programs for implementing the respective functions.

Information such as a program, a table, and a file for realizing each function can be stored in a storage device such as a memory, a hard disk, and a solid state drive (SSD), or a recording medium such as an integrated circuit (IC) card, a secure digital (SD) card, and a digital versatile disc (DVD).

Further, control lines and information lines that are considered to be necessary for the description are indicated, and not all the control lines and information lines that are necessary for mounting are necessarily indicated. In practice, it may be considered that almost all the configurations are connected to each other.

## Claims

1. A vehicle control device comprising:
a plurality of semiconductor chips each including one or more applications; and
one or more accelerators connected to the plurality of semiconductor chips,
wherein each of the plurality of semiconductor chips includes
an accelerator access unit that controls access to the one or more accelerators, and
a time slot information storage unit that stores time slot information indicating accessibility from the one or more applications to the one or more accelerators in time slots,
wherein the one or more applications are capable of outputting use requests to the one or more accelerators via the accelerator access unit, and
wherein the accelerator access unit determines whether to transfer the use requests to the one or more accelerators in response to the use requests from the one or more applications based on information about accessibility in a time slot corresponding to a current time.

2. The vehicle control device according to claim 1, wherein the plurality of semiconductor chips each further includes a time slot information updating unit that updates the time slot information stored in the time slot information storage unit.

3. The vehicle control device according to claim 2,
wherein the time slot information includes spare time slots in which any of the semiconductor chips is inaccessible to the one or more accelerators, and
wherein the time slot information updating unit
transmits, to the time slot information updating units of the other semiconductor chips, a request for updating the spare time slots to time slots in which a semiconductor chip to which the time slot information updating unit belongs among the plurality of semiconductor chips is capable of accessing the one or more accelerators,
updates the spare time slots to accessible time slots in a case of receiving permission of the updating from all the other time slot information updating units, and
updates the requested spare time slots to inaccessible time slots in a case of receiving a request for updating the spare time slots to time slots in which access to the one or more accelerators is possible.

4. The vehicle control device according to claim 3, wherein the time slot information updating unit transmits, to time slot information updating units belonging to the other semiconductor chips, a request for updating one of the time slots to a time slot in which the access to the one or more accelerators is possible in a case where a computation load of the one or more accelerator accessed by a semiconductor chip to which the time slot information updating unit belongs among the plurality of semiconductor chips exceeds a predetermined threshold.

5. The vehicle control device according to claim 3, wherein the time slot information updating unit updates at least one of the spare time slots to a time slot in which the semiconductor chip to which the time slot information updating unit belongs is capable of accessing another accelerator of the one or more accelerators in a case where a temperature of the one or more accelerators accessed by the semiconductor chip to which the time slot information updating unit belongs among the plurality of semiconductor chips exceeds a predetermined threshold.

6. The vehicle control device according to claim 2, wherein the time slot information updating unit updates the time slot information stored in the time slot information storage unit, based on time slot information received from an outside of a vehicle equipped with the vehicle control device.

7. The vehicle control device according to claim 1,
wherein in the one or more applications, priorities related to the use requests are set, and
wherein the accelerator access unit determines whether to output the use requests to the one or more accelerators depending on the priorities in a case of receiving the use requests from the one or more applications.

8. The vehicle control device according to claim 7, wherein the accelerator access unit outputs, in a case of receiving a second use request having a higher priority than a first use request after transfer of the first use request to a first accelerator, a command to interrupt processing to the first accelerator in response to the first use request.

9. The vehicle control device according to claim 7, wherein the accelerator access unit outputs, in a case of receiving the use request relating to a first accelerator from the one or more applications in a time slot in which access to the first accelerator is impossible, the received use request to the first accelerator in descending order of the priorities.

10. The vehicle control device according to claim 1,
wherein the plurality of semiconductor chips each includes a time synchronization unit that synchronizes times between the plurality of semiconductor chips,
wherein the time slots in the time slot information are set based on the synchronized times,
wherein in the time slots, an access prohibition time corresponding to an allowable time of an error of time synchronization between the plurality of semiconductor chips is set, and
wherein the accelerator access unit does not start outputting the use requests within the access prohibition time.

11. The vehicle control device according to claim 1,
wherein in the time slots, an access prohibition time is set in accordance with a length of time during which the one or more applications uses the one or more accelerators, and
wherein the accelerator access unit does not start outputting the use requests during the access prohibition time.
